# EUROPÄISCHE PATENTSCHRIFT

(11) **EP 0 520 565 B1**
(45) Veröffentlichungstag und Bekanntmachung des Hinweises auf die Patenterteilung: **03.06.1998**
(21) Anmeldenummer: 92201815.5
(22) Anmeldetag: 19.06.1992
(51) Int. Cl.: A47J 27/62, F24C 15/10, G05D 23/275

(54) **Verfahren zur Regelung der Fortkochleistung**
Method to control the heat for continuous cooking
Procédé de contrôle de la puissance de cuisson continu

(30) Priorität: 26.06.1991 DE 4121038; 06.07.1991 DE 4122430
(43) Veröffentlichungstag der Anmeldung: 30.12.1992
(73) Patentinhaber: Philips Patentverwaltung GmbH, 22335 Hamburg (DE); Philips Electronics N.V., 5621 BA Eindhoven (NL)
(72) Erfinder: Kersten, Reinhard,Dr., c/o Philips Patentverw.GmbH, 22335 Hamburg (DE); Klinkenberg, Klaus, c/o Philips Patentverw.GmbH, 22335 Hamburg (DE)
(74) Vertreter: Schmalz, Günther, Dipl.-Ing.

(56) Entgegenhaltungen:
- EP-A- 0 171 522
- WO-A-90/12301
- DE-A- 2 911 433
- DE-B- 1 022 331
- FR-A- 1 373 011

## Beschreibung

Die Erfindung bezieht sich auf ein Verfahren zur Regelung der Fortkochleistung für einen von einer Kochplatte, z.B. einer Lichtkochplatte, beheizbaren, Wasser enthaltenden Topf, der nur über ein einen Temperaturfühler aufweisendes Meßrohr mit der Außenluft verbunden ist, wobei die Fortkochleistung in Abhängigkeit von der vom Temperaturfühler gemessenen Temperatur beeinflußbar ist. Die Erfindung bezieht sich ferner auf eine Anordnung zur Durchführung dieses Verfahrens.

Die richtige Einstellung der Fortkochleistung zum Garen (Kartoffel, Nudeln, Gemüse, Eier und eventuell auch Braten) bedarf einer kontinuierlichen Beaufsichtigung durch den Benutzer. Dazu wird meistens auf herkömmliche Weise die Heizleistung von Hand höher oder niedriger eingestellt, und zwar in Abhängigkeit davon, ob das Kochgut brodelt oder nicht. Um ein stetiges Fortkochen zu gewährleisten, wird dabei häufig eine Leistung eingestellt, die größer ist als die eigentlich für den Prozeß benötigte Leistung. Dies bedeutet einen erhöhten Energiebedarf, eine erhöhte Abdampfrate, eine erhöhte Geruchsbelästigung und eventuell eine Zerstörung des Kochgutes.

Durch die DE-A-29 11 433 ist ein Temperaturregler für ein Kochgerät bekannt geworden, welches nur über ein Meßrohr mit der Außenluft verbunden ist, wobei dieses Meßrohr einen Temperaturfühler enthält. Als Temperaturfühler wird ein Heißleiter verwendet. Bei dieser Bauart wird die Fortkochleistung in Abhängigkeit von der vom Temperaturfühler gemessenen Temperatur beeinflußt. Diese Schrift beinhaltet einen elektronischen Zweipunktregler, nicht jedoch einen stetigen Regler. Hierbei handelt es sich lediglich um eine Umschaltung. Bei dieser Umschaltung werden die zwei stabilen Zustände des Heißleiters dazu verwendet, um zu unterscheiden, ob angekocht wird (volle Leistung) oder ob der Fortkochpunkt erreicht wird (reduzierte Leistung). Es gibt hier also nur eine einzige starre Umschalt-Aussage, die einmal von einer festen Ankochleistung zu einer festen Fortkochleistung umschalten, aber nicht proportional regeln kann.

Der Erfindung liegt die Aufgabe zugrunde, ein Verfahren der eingangs genannten Art derart zu verbessern, daß bei minimaler Dampferzeugung mit einem Minimum an Energie auf einfache und zuverlässige Weise die Fortkochleistung geregelt ist.

Diese Aufgabe wird gemäß der Erfindung dadurch gelöst,
a) daß der Topf bei Atmosphärendruck so lange erhitzt wird, bis jegliche Restluft auf dem Topf und einem anschließenden Teil des Meßrohres verdrängt ist,
b) daß eine im Meßrohr gebildete Grenzschicht zwischen dem aus dem Topf in das Meßrohr ausgestoßenen Dampf und der in das Meßrohr eingesaugten Luft von dem Temperaturfühler erfaßt wird und
c) daß diese Grenzschicht durch eine vom Temperaturfühler eingeleitete Regelung der Heizleistung innerhalb eines Meßbereiches des Temperaturfühlers örtlich konstant gehalten wird, wobei die Regelung der Heizleistung in einem Proportional-Regelverfahren erfolgt.

Damit wird durch eine automatisch geregelte Zufuhr von Energie gerade so viel Wasser bei Atmosphärendruck verdampft, daß jegliche Restluft aus dem Topf nach außen verdrängt wird. Dadurch wird erreicht, daß überall im Topf die hervorragenden Wärmeübertragungseigenschaften einer sogenannten "Wasserdampf-Heat-Pipe" vorliegen. Dieser Zustand liegt bekanntlich bereits beim ordnungsgemäß belüfteten Dampfdrucktopf vor. Im Gegensatz zum Dampfdrucktopf, der mit Überdruck arbeitet, geht es bei der Erfindung jedoch um Kochen bei Atmosphärendruck, also ohne Überdruck. Jede über den Idealzustand der reinen Wasserdampfatmosphäre hinausgehende Energiezufuhr erhöht nur die Wasserdampfproduktion nach außen, hilft aber in keiner Weise, den Garungsprozeß zu verbessern. Dieser Idealzustand ist durch das Verfahren gemäß der Erfindung erreichbar. Nach Beendigung der Entlüftung wird kein Wasser in Form von Dampf oder Kondensat durch das Meßrohr abgeführt. Bei der Bauart gemäß der Erfindung tritt bis auf das beim Entlüften austretende Luft-Dampf-Gemisch im stationären Betrieb kein Kondensat aus.

Der Temperaturfühler benutzt den beträchtlichen Unterschied im Wärmeübertragungsvermögen von reiner Luft und reinem Wasserdampf. Während reine Luft eine Wärmeleitfähigkeit von weniger als 0,1 W/m°K besitzt, vermag reiner Wasserdampf in einer sogenannten Heat-Pipe eine effektive Wärmeleitfähigkeit mehr als 1000 W/m°K zu erreichen. Dies beruht darauf, daß die Dampfmoleküle mit ihrer großen Wärmekapazität ungehindert zur Kondensationsfläche schießen können und durch den Rücklauf des kondensierten Wassers nicht behindert werden.

Eine nicht vollständige Entlüftung des Topfes ist immer dann detektierbar, wenn die Temperaturschwankungen pro Zeiteinheit in der Nähe der Setztemperatur des Temperaturfühlers klein sind. Die Erfindung ermöglicht somit neben dem automatischen Kochablauf für Ankochen und Fortkochen auch eine einfache Kontrolle einer wirksamen Entlüftung. Bei der Bauart gemäß der Erfindung läuft das im Meßrohr anfallende Kondensat vollständig wieder in den Topf zurück, womit ein Trockenkochen auch bei extrem kleinen Wassermengen unmöglich ist. Die Erfindung ermöglicht ein energiesparendes Garen, weil ein Minimum an Wassermenge ausreicht (schnelles Ankochen) und die Abdampfrate extrem klein ist (weniger als 5 g/h, minimalste Fortkochleistung). Ferner ergibt sich wegen der kleinen Abdampfrate ein nahezu geruchloses Kochen. Garen im reinen Wasserdampf bei 100°C ist lebensmittelschonend wegen des Ausschlusses von Sauerstoff, ferner werden mechanische Zerstörungen durch Sprudeln oder Überdruck beim Öffnen vermieden. Das Verfahren funktioniert zwischen dem Toten Meer und dem Montblanc, da auf die Grenze Wasserdampf-Luft geregelt wird und nicht auf eine feste Temperatur.

Da bei Atmosphärendruck gekocht wird, ist eine leichte Topfkonstruktion möglich. Auch bei Verwendung von Glastöpfen ist die Erfindung zu gebrauchen, dies vorzugsweise beim Kochen mit Licht. Der Deckel des Topfes kann während des Garprozesses zu einer Revision oder zwecks Zugabe eines weiteren Kochgutes mit kürzerer Garzeit abgenommen werden, ohne daß dies Schaden anrichtet. Das System regelt sich nach Erkennen der Belüftung z.B. durch Einleitung eines vollen Leistungsschubes selbsttätig wieder auf den alten Zustand ein. Sowohl unterschiedliche stationäre Wärmeverluste (z.B. unterschiedliche Topfgrößen und Oberflächen) als auch dynamische Änderungen (z.B. der schwindende Energieentzug garender Kartoffeln) werden automatisch ausgeregelt.

Die erfindungsgemäße Regelung erfolgt in einem Proportional-Regelverfahren, z.B. mit einem PID-Regler. Sobald nach einer Leistungszufuhr die Luft aus dem Topf und mindestens einem anschließenden Teil des Meßrohres verdrängt ist, stellt sich im Meßbereich des Temperaturfühlers eine Temperatur ein, die als Setztemperatur bezeichnet wird und auf die geregelt wird. Bei kleinen Abweichungen von der Setztemperatur wird mit kleinen Leistungen und bei großen Abweichungen von der Setztemperatur mit großen Leistungen nachgeregelt.

Gute Ergebnisse lassen sich dadurch erzielen, daß im Bereich der Setztemperatur (z.B. ± 5° K, also z.B. zwischen 80 und 90°C) die Regelverstärkung konstant niedrig ist, während sie außerhalb dieses Bereiches linear ansteigt.

Eine vorteilhafte Ausbildung des Verfahrens gemäß der Erfindung ist dadurch gekennzeichnet, daß zunächst bei kleinen Temperatursignalen am Fühler von z.B. unterhalb 40°C die volle Leistung eingestellt wird, daß sodann bei mitteleren Temperatursignalen von z.B. 40 bis 85°C die Leistung kontinuierlich bis auf Null zurückgefahren wird und daß danach in einem Proportional-Regelverfahren die Heizleistung in Abhängigkeit von der im Meßbereich des Temperaturfühlers schwankenden Dampf-Luft-Grenzschicht geregelt wird. Bei einem derartigen Verfahren wird zunächst beim Ankochen die volle Leistung eingestellt, so daß das Wasser sehr schnell auf die Siedetemperatur von 100° kommt. Wenn die Temperatursignale dabei steigen und einen mittleren Bereich von etwa 40° erreicht haben, wird die Leistung kontinuierlich zurückgefahren und bei Erreichen der Setztemperatur des Temperaturfühlers abgeschaltet. Durch Erreichen der Setztemperatur ist gewährleistet, daß die Restluft vollständig aus dem Topf und aus dem angrenzenden Bereich des Meßrohres herausgedrängt ist. Danach beginnt die eigentliche Regelung in einem Proportional-Regelverfahren, wobei die Heizleistung in Abhängigkeit von der im Meßbereich des Temperaturfühlers schwankenden Grenzschicht zwischen dem aus dem Topf herausgedrängten heißen Dampf und der bei einer Abkühlphase in das Meßrohr eingesaugten Außenluft geregelt wird.

Die Regelanordnung und die Regelparameter sind dabei so ausgebildet und ausgelegt, daß beim Regelvorgang die hin- und herschwankende Grenzschicht zwischen dem aus dem Topf in das Meßrohr ausgestoßenen Dampf und der in das Meßrohr eingesaugten Luft im Meßbereich des Sensors innerhalb des Meßrohres liegt. Dadurch ist gewährleistet, daß aus dem Meßrohr im stationären Betrieb kein Dampf nach außen austritt. Das bedeutet einen extrem kleinen Wasserverlust.

In weiterer Ausgestaltung der Erfindung kann vorgesehen sein, daß bei großen Temperatursignalen oberhalb der Setztemperatur die Leistungszufunr vollständig unterbrochen wird.

Es kann vorkommen, daß die Fühlertemperatur sehr dicht bei der Setztemperatur (unterhalb der Maximaltemperatur) liegt, obwohl der Topf noch nicht entlüftet ist. Dies ist z.B. der Fall, wenn während des Garprozesses der Topf nur kurz geöffnet wird, ohne weiteres Kochgut einzugeben. In diesem Fall sieht das Regelsystem keine Veranlassung, durch erhöhte Leistung das Luft-Wasserdampf-Gemisch herauszudrücken und rasch in den normalen Regelfall zu gehen. In diesem Falle verläuft die Temperaturkurve des Fühlers recht glatt, während bei einem Normalregelfall die Temperaturkurve heftig, und zwar um ca. ± 5° K, um den Setzwert schwankt. In Ausgestaltung der Erfindung wird daher vorgesehen, daß das Vorliegen einer durch den Regelvorgang bewirkten, im wesentlichen gleichmäßigen Temperaturschwankung am Sensor als Maß für die Güte der Entlüftung (Entfernung der Restluft) des Topfes ausgewertet wird. In einer weiteren Ausgestaltung kann eine solche Störung dadurch detektiert werden, daß ein zweiter Temperaturfühler am oder im Meßrohr vorgesehen ist, der in Richtung Rohrauslaß angeordnet ist.

Die Erfindung bezieht sich ferner auf eine Anordnung zur Durchführung des Verfahrens
- wobei das Innere des Topfes nur über das Meßrohr mit der Außenluft in Verbindung steht,
- wobei das Meßrohr in einem Bereich oberhalb der Wasseroberfläche so angekoppelt ist, daß das im Rohr anfallende Kondensat durch natürliches Gefälle in den Topf zurückläuft, und
- wobei der Temperaturfühler mit einer Regeleinrichtung zur Beeinflussung der Heizleistung verbunden ist.

Diese Anordnung ist dadurch gekennzeichnet,
- daß der Temperaturfühler außerhalb des als Meßstrecke dienenden Meßrohres angeordnet und an dieses thermisch gut leitend angekoppelt ist und
- daß als Regeleinrichtung eine Proportional-Regeleinrichtung vorgesehen ist.

Die Öffnung des Meßrohres zur Außenluft stellt immer die höchste Stelle des Rohres dar, um das Kondensat im Rohr sicher in den Topf zurückzuleiten. Außen an dem Meßrohr sind ein oder zwei kapazitätsarme Temperaturfühler angebracht, die nach außen an die Umgebungsluft angekoppelt sind und mit Hilfe der Proportional-Regeleinrichtung die Heizleistung beeinflussen. Damit ist eine robuste, einfache Ausführung ohne bewegliche Bauteile möglich. Als Temperaturfühler können einfache Standard-Temperaturfühler verwendet werden. Vorteilhaft wird das Meßrohr schräg gestellt, um auf der Unterseite das Kondensat zurückfließen zu lassen und die Meßfühler auf der gegenüberliegenden Seite weitgehend kondensatfrei zu halten.

Weitere zweckmäßige Ausgestaltungen der Erfindung sind in den Unteransprüchen, weitere Vorteile und eine eingehende Funktionsbeschreibung sind in der nachfolgenden Zeichnungsbeschreibung erläutert.

In der Zeichnung ist in den Fig. 1 bis 3 ein Ausführungsbeispiel des Gegenstandes gemäß der Erfindung schematisch dargestellt.
Fig. 1 zeigt eine schematische Prinzipdarstellung einer Anordnung gemäß der Erfindung,
Fig. 2 zeigt ein zugehöriges Meßdiagramm und
Fig. 3 ein weiteres Meßdiagramm für zwei Meßfühler.

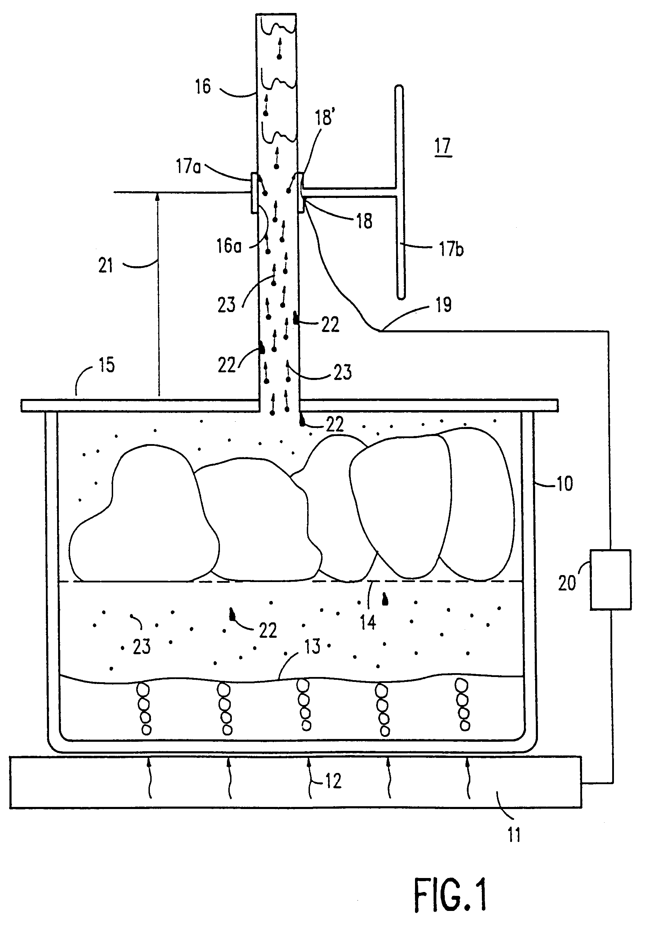

Gemäß Fig. 1 steht ein Kochtopf 10 auf einer Heizplatte 11 und wird durch eine Leistungszufuhr 12 beheizt. Der Kochtopf ist bis zu einer Höhe 13 mit Wasser gefüllt und enthält im oberen Bereich ein Gitter 14, auf dem Kochgut (Kartoffeln) liegt. Der Kochtopf 10 ist über einen Deckel 15 geschlossen, der mit einem nach oben gerichteten Meßrohr 16 versehen ist. Das Innere des Topfes steht nur über das Rohr 16 mit der Außenluft in Verbindung. Im Bereich 16a des Meßrohres ist ein Kühler 17 angekoppelt, der mit einer kleinen Fläche 17a fest am Meßrohr 16a anliegt und eine große Kühlfläche 17b zur Umgebungsluft hin aufweist. An der Koppelstelle ist ferner ein Temperaturfühler 18 angeordnet, der über eine Leitung 19 mit einer schematisch dargestellten Regeleinrichtung 20 zur Regelung der Leistungszufuhr für die Heizplatte 11 verbunden ist. Der Kühler 17 ist in einem Abstand 21 oberhalb des Deckels 15 angeordnet und bildet mit dem Temperaturfühler 18 und dem Teil 16a des Meßrohres 16 eine Wärmeentzugseinrichtung mit Wärmeflußmessung. Der Temperaturfühler 18 ist an der Meßstelle 18' angebracht, an der der Wärmestrom von der inneren Kondensationsfläche im Bereich des Rohres 16a zur Kühlfläche 17b fließt. Die kondensierten Wassertröpfchen sind im folgenden mit 22 und der im Raum oberhalb der Wasserfläche 13 und im Rohr 16 befindliche Wasserdampf ist mit 23 bezeichnet.

Zur Erläuterung des Meßprinzips werden im folgenden zunächst zwei Grenzfälle erläutert:
1. Bei starkem Kochen wird die Innenfläche des Rohres 16 durch Wasserkondensation 22 auf einer Temperatur von 100°C gehalten, die wegen des geringen Wärmewiderstandes des Systems "reiner Wasserdampf 23 + Kondensation 22" nur wenig vom Wärmeentzug beeinflußt wird. Entsprechend den Wärmewiderständen Innenwand des Rohres 16 - Meßstelle 18' und Meßstelle 18' - Kühlfläche 17b stellt sich an der Meßstelle 18' eine Temperatur < 100°C ein (im vorliegenden Beispiel ca. 85°C). Diese Temperatur wird nur durch die Schwankungsbreite der Umgebungstemperatur beeinflußt (ca. 15°C bis 30°C), und zwar umso weniger, je besser die Meßstelle 18' an die Innenwand des Rohres 16 angekoppelt ist.
2. Wenn das Wasser nicht kocht, tritt von unten wenig Wasserdampf 23 in das Rohr 16 ein, es befindet sich Luft mit schlechten Wärmeübertragungseigenschaften im Inneren des Rohres 16. Dies hat zur Folge, daß die Temperatur der Meßstelle 18' durch den Wärmeentzug kräftig erniedrigt wird.

Zustände zwischen diesen beiden Extremen werden nachfolgend beschrieben. Bei noch ausreichender Fortkochleistung tritt vom Topf 10 aus gesehen immer Wasserdampf 23 in das Meßrohr 16 ein, der die Luft am Rohreintritt verdrängt. Bei geringer Fortkochleistung kondensiert dieser Wasserdampf weitgehend innerhalb des Meßrohres 16, so daß im Normalbetrieb kein Wasserdampf das Meßrohr verläßt. Der Luftgehalt nimmt nach oben stetig zu, und deshalb ist das Wärmetransportvermögen nach oben hin zunehmend behindert. Beim Wärmeentzug am Meßrohr 16 im Bereich des Kühlers 17 wird sich also nach oben entsprechend der Erhöhung des Luftgehaltes eine immer niedrigere Temperatur am Meßrohr 16 einstellen. Für den Temperaturfühler 18 bedeutet also eine niedrige Temperatur von z. B. < 60°C, daß das Meßrohr 16 oder sogar der obere Teil des Topfes 10 mit Luft gefüllt, also der Fortkochzustand nicht erreicht ist. Im Bereich z.B. zwischen 60°C und 85°C befindet sich die Trenngrenze Wasserdampf-Luft innerhalb des Meßrohres 16, und zwar umso weiter oben, je höher die gemessene Temperatur ist. Beim erreichten Maximalwert von z.B. 85°C liegt die Trenngrenze zwischen Wasserdampf und Luft mit Sicherheit oberhalb der Meßstelle, d.h., jegliche Luft ist aus dem gesamten Meßrohr verdrängt. Dies bedeutet heftiges Fortkochen.

Die gewählte Anordnung ermöglicht die Temperaturmessung mit Hilfe eines einzigen Temperaturfühlers 18. Dies ist vorteilhafter gegenüber einer Messung mit einem Wärmeflußmesser, z.B. einer Thermosäule. Der Temperaturfühler 18 kann auch innerhalb des Meßrohres 16 angeordnet sein. Dies hat aber Nachteile beim Reinigen. Ferner kann das in Fig. 1 schematisch dargestellte Meßrohr 16 mit zugehörigem Meßfühler 18 innerhalb eines handlich ausgebildeten Handgriffes angeordnet sein.

Da die Wärmeübertragung innerhalb der Dampfphase nicht nennenswert durch die Festkörperwärmeleitung längs des Meßrohres 16 beeinflußt werden soll, besitzt das Meßrohr in Ausgetaltung der Erfindung in Längsrichtung eine geringe Festkörperleitung.

Für eine kurze Ansprechzeit des Temperaturfühlers 18 bei nachlassender Fortkochtätigkeit, bei der das Meßrohr sich mit Luft füllt, ist eine rasche Abkühlung der Temperaturmeßstelle wünschenswert. Daher ist in Ausgestaltung der Erfindung die Wärmekapazität der Anordnung klein gehalten.

Beispielsweise ist als Meßrohr 16 ein dünnwandiges Edelstahlrohr für die beiden vorgenannten Bedingungen hervorragend geeignet, es kann aber auch ein Kunststoffrohr infrage kommen.

Ein zu kleiner Durchmesser für das Meßrohr 16 bietet zu wenig Querschnitt für den Rückfluß des Kondensats 22 und ist empfindlich gegenüber Verschmutzungen. Ein zu großer Durchmesser führt zu konvektiven Vermischungen an der Wasserdampf-Luftgrenze, also zu einer größeren Unschärfe des durch den Temperaturfühler ermittelten Meßsignals. Daher wird in weiterer Ausgestaltung der Erfindung vorgesehen, daß der Durchmesser des Meßrohres 16 so gewählt wird, daß ein zuverlässiger Rückfluß des Kondensats 22 gewährleistet und eine konvektive Vermischung an der Grenze Wasserdampf-Luft verhindert ist. Versuche haben ergeben, daß ein Durchmesser von ca. 8 mm bis 12 mm vorteilhaft ist.

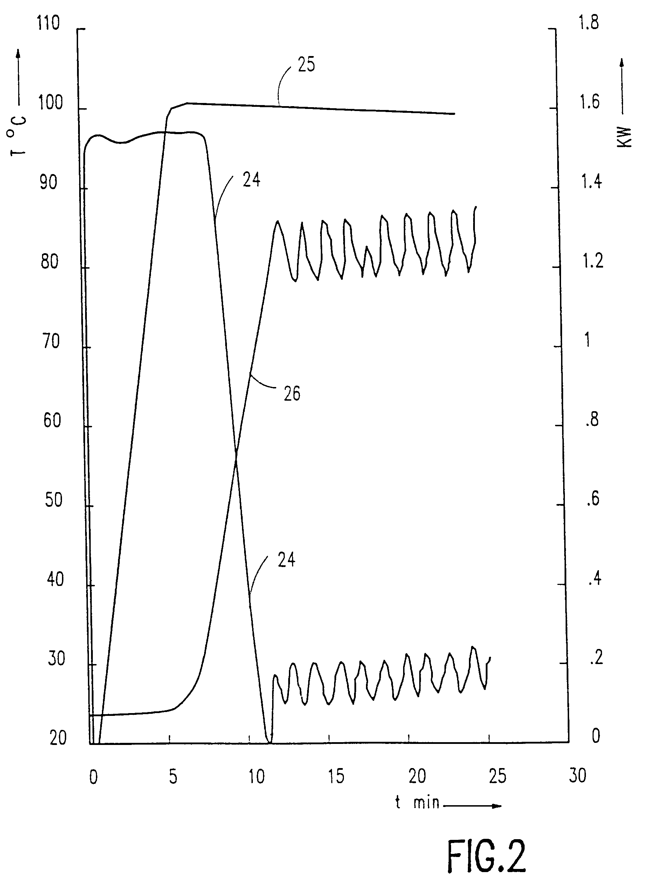

In Fig. 2 sind die Meßergebnisse eines automatischen An- und Fortkochens eines Kochgütes mit einer Anordnung gemäß Fig. 1 schematisch dargestellt. Aufgetragen sind über der Zeit die Leistung 24, die Wassertemperatur 25 und die Temperatur 26 der in Abstand 21 vom Deckel 15 angeordneten Meßstelle 18'. Das an dieser Meßstelle von dem Temperaturfühler 18 gewonnene Temperatursignal ist mit 26 bezeichnet. Dieses Temperatursignal wurde in einem Proportional-Regelvorgang mit der Heizplatte 11 in der folgenden Weise verknüpft:

Für Temperaturen unter 40°C wurde die volle Leistung eingestellt. Für Temperaturen im Bereich zwischen 40°C und 85°C wurde die Leistung bis auf 0 W zurückgenommen, danach beginnt der eigentliche Regelvorgang bis zum Abschluß des Garvorganges. Für Temperaturen > 85°C blieb die Kochplatte 11 abgeschaltet.

Wie das Diagramm zeigt, spricht der Temperaturfühler 18 erst spät auf den beginnenden Kochvorgang an. Dies ist ein Zeichen für das geringe Ansprechen auf das vorher bereits warm austretende Luft-Wasserdampf-Gemisch. Die Leistung 24 wird ohne nennenswerte Einschwingvorgänge zurückgeregelt. Wasserdampf tritt nur in sehr geringen Mengen aus. Für einen einstündigen so geregelten Fortkochvorgang wurden Verlustraten von nur etwa 5 g bis 10 g Wasser pro Stunde ermittelt. Die Versuchsergebnisse zeigen, daß bei diesen geringen Abdampfraten die Luft aus dem Topf vollständig verdrängt ist, da sowohl das Kochgut im Wasser als auch das unterhalb des Deckels 15 im wesentlichen den gleichen Garungszustand aufwiesen.

Für ein automatisches Garen erfolgt vorzugsweise eine Festlegung der Maximalleistung beim Ankochen, um gegebenenfalls bei empfindlichem Kochgut, z.B. Milch, ein Anbrennen zu vermeiden. Diese Maximalleistung gilt dann auch für den folgenden Regelbereich des Fortkochens, z. B. nach Öffnen des Deckels 15.

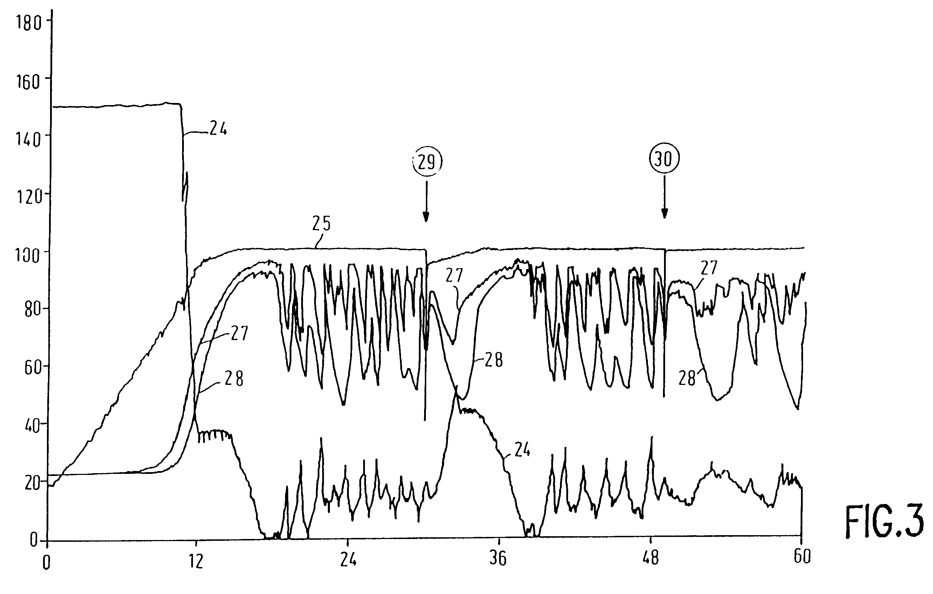

Fig. 3 zeigt ein Meßdiagramm mit einem zusätzlichen zweiten Meßfühler in Richtung zum Rohrauslaß. Die Temperatur des ersten Fühlers ist mit 27 und die des zweiten Fühlers mit 28 bezeichnet. Der zweite Meßfühler ist zwischen dem ersten Fühler und dem Rohrauslaß angeordnet.

Im Bereich 29 erfolgt eine Beschickung mit zusätzlichem Gargut. Kurve 25 fällt ab, ferner fallen beide Temperaturkurven 27, 28 etwa gleichzeitig ab. Die Nachbeschickung wird also problemlos erfaßt und entsprechend nachgeregelt (siehe Kurve 27).

Im Bereich 30 erfolgt eine kurzzeitige Belüftung (Deckel geöffnet). Beide Temperaturkurven laufen zunächst parallel weiter und fallen erst dann ungleichmäßig ab. Der Entlüftungszustand ist also durch diesen typischen Kurvenverlauf erkennbar. Die Störung kann damit regeltechnisch kompensiert werden (beide Temperaturen nahe dem Setzwert mit gleichförmigem Verlauf).

## Patentansprüche

1. Verfahren zur Regelung der Fortkochleistung für einen von einer Kochplatte (11), z.B. einer Lichtkochplatte, beheizbaren, Wasser enthaltenden Topf (10), der nur über ein einen Temperaturfühler (18) aufweisendes Meßrohr (16) mit der Außenluft verbunden ist, wobei die Fortkochleistung in Abhängigkeit von der vom Temperaturfühler (18) gemessenen Temperatur beeinflußbar ist,
dadurch gekennzeichnet,
a) daß der Topf (10) bei Atmosphärendruck so lange erhitzt wird, bis jegliche Restluft aus dem Topf (10) und einem anschließenden Teil des Meßrohres (16) verdrängt ist,
b) daß eine im Meßrohr (16) gebildete Grenzschicht zwischen dem aus dem Topf (10) in das Meßrohr (16) ausgestoßenen Dampf (23) und der in das Meßrohr (16) eingesaugten Luft von dem Temperaturfühler (18) erfaßt wird und
c) daß diese Grenzschicht durch eine vom Temperaturfühler (18) eingeleitete Regelung der Heizleistung innerhalb eines Meßbereiches des Temperaturfühlers (18) örtlich konstant gehalten wird, wobei die Regelung der Heizleistung in einem Proportional-Regelverfahren erfolgt.

2. Verfahren nach Anspruch 1,
dadurch gekennzeichnet, daß zunächst bei kleinen Temperatursignalen von z.B. unterhalb 40° die volle Leistung eingestellt wird, daß sodann bei mittleren Temperatursignalen von z.B. 40° - 85° die Leistung kontinuierlich bis auf Null zurückgefahren wird und daß danach in einem Proportional-Regelverfahren die Heizleistung in Abhängigkeit von der im Meßbereich des Temperaturfühlers schwankenden Dampf-Luft-Grenzschicht geregelt wird.

3. Verfahren nach einem der Ansprüche 1 bis 2,
dadurch gekennzeichnet, daß das Vorliegen einer durch den Regelvorgang bewirkten, im wesentlichen gleichmäßigen Temperaturschwankung am Fühler (18) als Maß für die Güte der Entlüftung (Entfernung der Restluft) des Topfes (10) ausgewertet wird.

4. Verfahren nach einem der Ansprüche 1 bis 3,
dadurch gekennzeichnet, daß zur Regelung der Heizleistung ein PID-Regler verwendet wird.

5. Anordnung zur Durchführung eines Verfahrens nach einem der Ansprüche 1 bis 4,
- wobei das Innere des Topfes (10) nur über das Meßrohr (16) mit der Außenluft in Verbindung steht,
- wobei das Meßrohr (16) in einem Bereich oberhalb der Wasseroberfläche so angekoppelt ist, daß das im Rohr (16) anfallende Kondensat durch natürliches Gefälle in den Topf (10) zurückläuft, und
- wobei der Temperaturfühler (18) mit einer Regeleinrichtung (20) zur Beeinflussung der Heizleistung (12) verbunden ist,
dadurch gekennzeichnet,
- daß der Temperaturfühler (18) außerhalb des als Meßsstrecke dienenden Meßrohres (16) angeordnet und an dieses thermisch gut leitend angekoppelt ist und
- daß als Regeleinrichtung (20) eine Proportional-Regeleinrichtung vorgesehen ist.

6. Anordnung nach Anspruch 5,
dadurch gekennzeichnet, daß ein zweiter Temperaturfühler vorgesehen ist, der in Richtung zum Rohrauslaß angeordnet ist.

7. Anordnung nach einem der Ansprüche 5 oder 6,
dadurch gekennzeichnet, daß das Meßrohr (16) schräg angeordnet ist und daß die Fühler (18) an der dem Kondensatrückfluß gegenüberliegenden Seite angeordnet sind.

8. Anordnung nach einem der Ansprüche 5 bis 7,
gekennzeichnet durch eine geringe Festkörperleitung längs des Meßrohres (16) und eine möglichst kleine Wärmekapazität der Anordnung.

9. Anordnung nach einem der Ansprüche 5 bis 8,
dadurch gekennzeichnet, daß das Meßrohr (16) ein dünnwandiges Edelstahlrohr ist.

10. Anordnung nach einem der Ansprüche 5 bis 8,
dadurch gekennzeichnet, daß das Meßrohr aus Kunststoff besteht.

11. Anordnung nach einem der Ansprüche 5 bis 10,
dadurch gekennzeichnet, daß der Durchmesser des Meßrohres (16) so gewählt ist, daß ein zuverlässiger Rückfluß des Kondensats (22) gewährleistet und eine konvektive Vermischung an der Grenze Wasserdampf-Luft verhindert ist.

12. Anordnung nach einem der Ansprüche 5 bis 11,
dadurch gekennzeichnet, daß das Meßrohr (16) am Deckel (15) oder am oberen Rand des Topfes (10) angeordnet ist.

## Claims

1. A method of controlling the boiling power for a water-containing vessel (10) which can be heated by a cook-top (11), for example a light cook-top, which vessel only communicates with the ambient air *via* a measurement tube (16) provided with a temperature sensor (18), which boiling power can be influenced in dependence upon the temperature measured by means of the temperature sensor (18),
characterized in that
a) the vessel (10) is heated at atmospheric pressure until any residual air has been expelled from the vessel (10) and an adjoining part of the measurement tube (16),
b) the interface, formed in the measurement tube (16), between the steam (23) expelled from the vessel (10) into the measurement tube and the air drawn into the measurement tube (16) is detected by means of the temperature sensor (18), and
c) the location of said interface is maintained constant within a measurement area of the temperature sensor (18) by a heating-power control process initiated by the temperature sensor (18), the heating power being controlled in a proportional control process.

2. A method as claimed in Claim 1,
characterized in that initially the full power is applied for low-temperature signals of, for example, below 40°, after which for mid-temperature signals of, for example, 40° - 85° the power is continuously reduced to zero, and subsequently in a proportional control process the heating power is controlled in dependence upon steam-air interface which fluctuates in the measurement area of the temperature sensor.

3. A method as claimed in any one of the Claims 1 to 2, characterized in that the presence of a substantially uniform temperature fluctuation at the sensor (18) caused by the control process is used as a measure of the venting quality (expulsion of residual air) of the vessel (10).

4. A method as claimed in any one of the Claims 1 to 3, characterized in that a PID controller is used for controlling the heating power.

5. A device for carrying out a method as claimed in any one of the Claims 1 to 4,
- in which the interior of the vessel (10) only communicates with the ambient air *via* the measurement tube (16),
- in which in an area above the water surface the measurement tube (16) is coupled to said vessel is such a way that condensate formed in the tube (16) flows back into the vessel (10) by gravity, and
- in which the temperature sensor (18) is connected to a control device (20) for influencing the heating power (12),
characterized in that
- the temperature sensor (18) is arranged outside the measurement tube (16) serving as the measurement location and is coupled to said sensor in a properly thermally conductive manner, and
- the control device (20) is a proportional control device.

6. A device as claimed in Claim 5,
characterized in that there is provided a second temperature sensor arranged nearer the tube outlet.

7. A device as claimed in Claim 5 or 6, characterized in that the measurement tube (16) is arranged in an inclined position and the sensors (18) are arranged at the end which is remote from the condensate reflux area.

8. A device as claimed in any one of the Claims 5 to 7, characterized by a low thermal conduction along the solid material of the measurement tube (16) and a minimal thermal capacity of the device.

9. A device as claimed in any one of the Claims 5 to 8, characterized in that the measurement tube (16) is a thin-walled high-grade-steel tube.

10. A device as claimed in any one of the Claims 5 to 8, characterized in that the measurement tube (16) is made of a synthetic material.

11. A device as claimed in any one of the Claims 5 to 10, characterized in that the diameter of the measurement tube (16) is selected so as to ensure a reliable reflux of the condensate (22) and to inhibit convective mixing at the steam-air interface.

12. A device as claimed in any one of the Claims 5 to 11, characterized in that the measurement tube (16) is arranged on the lid (15) or on the upper edge of the vessel (10).

## Revendications

1. Procédé de réglage de la puissance de cuisson continue pour une casserole (10) contenant de l'eau qui peut être chauffée par une plaque de cuisson (11) par exemple une plaque vitrocéramique, laquelle casserole est reliée seulement à l'air extérieur par un tube de mesure (16) présentant une sonde de température (18), la puissance de cuisson continue pouvant être influencée en fonction de la température mesurée par la sonde de température (18), caractérisé en ce
a) que la casserole (10) est chauffée à la pression atmosphérique jusqu'à ce que l'air résiduel soit expulsé de la casserole (10) et d'une partie adjacente du tube de mesure (16),
b) qu'une couche limite formée dans la tube de mesure (16) entre la vapeur (23) évacuée de la casserole (10) dans le tube de mesure (16) et l'air injecté dans le tube de mesure (16) est enregistrée par la sonde de température (18), et
c) que cette couche limite est maintenue localement constante par un réglage de la puissance de chauffage réglée par la sonde de température (18) dans une plage de mesure de la sonde de température (18), le réglage de la puissance de chauffage étant assuré dans un procédé de réglage proportionnel.

2. Procédé selon la revendication 1, caractérisé en ce que la pleine puissance est d'abord réglée pour de petits signaux de température, par exemple inférieurs à 40°, que, dès lors, pour des signaux de température moyens de 40° à 85° par exemple, la puissance est ramenée en continu jusqu'à zéro et qu'ensuite, la puissance de chauffage est réglée dans un processus de réglage proportionnel par la couche limite vapeur/air variant dans la plage de mesure de la sonde de température.

3. Procédé selon l'une des revendications 1 et 2, caractérisé en ce que la présence d'une variation de température essentiellement uniforme provoquée par le processus de réglage sur la sonde (18) est évaluée comme une mesure de la qualité de l'évacuation de l'air (évacuation de l'air résiduel) de la casserole (10).

4. Procédé selon l'une des revendications 1 à 3, caractérisé en ce qu'un régulateur PID est utilisé pour le réglage de la puissance de chauffage.

5. Dispositif de mise en oeuvre d'un procédé selon l'une des revendications 1 à 4, dans lequel
- l'intérieur de la casserole (10) n'étant relié à l'air extérieur que par l'intermédiaire du tube de mesure (16),
- le tube de mesure (16) étant couplé dans une zone au-dessus de la surface de l'eau de telle sorte que le condensat formé dans le tube (16) soit recyclé par la gravité dans la casserole (10), et
- la sonde de température (18) est reliée à un dispositif de réglage (20) en vue d'influencer la puissance de chauffage (12),
caractérisé en ce
- que la sonde de température (18) est disposée en dehors du tube de mesure (16) servant de plage de mesure et couplée pour être thermiquement bien conductrice, et
- qu'un dispositif de réglage propoitionnel est prévu comme dispositif de réglage (20).

6. Dispositif selon la revendication 5, caractérisé en ce qu'une deuxième sonde de température est prévue et est dispesée dans la direction de la sortie du tube.

7. Dispositif selon l'une des revendications 5 ou 6, caractérisé en ce que le tube de mesure (16) est disposé obliquement et que les sondes (18) sont disposées sur la face opposée au reflux du condensat.

8. Dispositif selon l'une des revendications 5 à 7, caractérisé par une conduction minime des corps solides le long du tube de mesure (16) et une capacité thermique minimale du dispositif.

9. Dispositif selon l'une des revendications 5 à 8, caractérisé en ce que le tube de mesure (16) est un tube en acier spécial à fine paroi.

10. Dispositif selon l'une des revendications 5 à 8, caractérisé en ce que le tube de mesure est en plastique.

11. Dispositif selon l'une des revendication 5 à 10, caractérisé en ce que le diamètre du tube de mesure (16) est choisi de manière à garantir un reflux fiable du condensat (22) et à empêcher un mélange convectif à la limite vapeur d'eau/air.

12. Dispositif selon l'une des revendications 5 à 11, caractérisé en ce que le tube de mesure (16) est disposé sur le couvercle (15) ou sur le bord supérieur de la casserole (10).
